Europäisches Patentamt

European Patent Office

Office européen des brevets

(11) Veröffentlichungsnummer : **0 074 382**
**B1**

(12) EUROPÄISCHE PATENTSCHRIFT

(45) Veröffentlichungstag der Patentschrift :
28.08.85

(21) Anmeldenummer : 82900951.3

(22) Anmeldetag : 23.03.82

(86) Internationale Anmeldenummer :
PCT/EP 82/00060

(87) Internationale Veröffentlichungsnummer :
WO/8203288 (30.09.82 Gazette 82/23)

(51) Int. Cl.⁴ : **G 07 F 7/08, G 07 F 7/10**

(54) DATENVERARBEITUNGSVORRICHTUNG.

(30) Priorität : 23.03.81 DE 3111353

(43) Veröffentlichungstag der Anmeldung :
23.03.83 Patentblatt 83/12

(45) Bekanntmachung des Hinweises auf die Patenterteilung : 28.08.85 Patentblatt 85/35

(84) Benannte Vertragsstaaten :
AT BE CH DE FR GB LI LU NL SE

(56) Entgegenhaltungen :
EP-A- 0 016 276
EP-A- 0 020 158
US-A- 3 520 280
US-A- 3 587 049
US-A- 3 648 020
US-A- 3 696 335
US-A- 3 845 277
US-A- 3 996 450

(73) Patentinhaber : Stockburger, Hermann
Kirnachweg 7
D-7742 St. Georgen (DE)

Winderlich, Hans-Georg
Niedere Strasse 36
D-7730 Villingen (DE)

(72) Erfinder : Stockburger, Hermann
Kirnachweg 7
D-7742 St. Georgen (DE)
Erfinder : Winderlich, Hans-Georg
Niedere Strasse 36
D-7730 Villingen (DE)

(74) Vertreter : Prüfer, Lutz H., Dipl.-Phys.
Harthauser Strasse 25d
D-8000 München 90 (DE)

**Beschreibung**

Die Erfindung betrifft eine Datenverarbeitungsvorrichtung nach dem Oberbegriff des Anspruchs 1.

Aus der US-A-3 845 277 und der DE-A-20 20 031 ist eine Datenverarbeitungseinrichtung mit einer Datenlesevorrichtung zum Lesen von Kontokarten und einer Speichervorrichtung zum Speichern von Kontonummern ungültiger Karten und einer Vergleichsvorrichtung zum Vergleichen der von der Karte abgelesenen Kontonummer mit den in der Speichervorrichtung gespeicherten Kontonummer mit den in der Speichervorrichtung gespeicherten Kontonummern ungültiger Karten bekannt. Der Speicher ist einerseits mit der Lesevorrichtung und andererseits mit einer Eingabevorrichtung zum Eingeben von Daten über die nicht mehr gültigen Karten verbunden.

Aus der US-A-3 696 335 ist eine Bankkartenstation beschrieben, die einen Speicher aufweist, in den Daten über nicht mehr gültige Kreditkarten eingebbar sind. Die Daten solcher Karten werden von einer Zentralstation über eine Telefonleitung im On-line-Betrieb zu dem Speicher der Bankkartenstation übertragen.

Aufgabe der Erfindung ist es, die Eingabe der Daten über ungültige Daten zu vereinfachen.

Diese Aufgabe wird durch eine Datenverarbeitungsvorrichtung der eingangs beschriebenen Art gelöst, die gemäß der Erfindung dadurch gekennzeichnet ist, daß der zusätzliche Speicher direkt mit der Schreib-Leseeinrichtung verbunden ist zum Einlesen der Daten über solche Datenträger, die nicht mehr Gültigkeit haben sollen, von einem zweiten Typ von Datenträgern (Fangkarte 8), so daß das Auslesen der den Bearbeitungsvorgang sperrenden Daten des zweiten Typs von Datenträgern über dieselbe Eingabevorrichtung geschieht wie das Auslesen der Daten der Datenträger des ersten Typs.

Die Schreib-Leseeinrichtung wird also nicht nur zum Einlesen von Daten der mit der Datenverarbeitungsvorrichtung zu behandelnden Datenträger, sondern gleichzeitig zum Eingeben von Daten über nicht mehr gültige Karten in den Speicher verwendet. Dadurch werden Aufbau und Betrieb vereinfacht.

Im weiteren wird die Erfindung anhand eines Ausführungsbeispiels unter Bezugnahme auf die Figuren beschrieben. Von den Figuren zeigen :

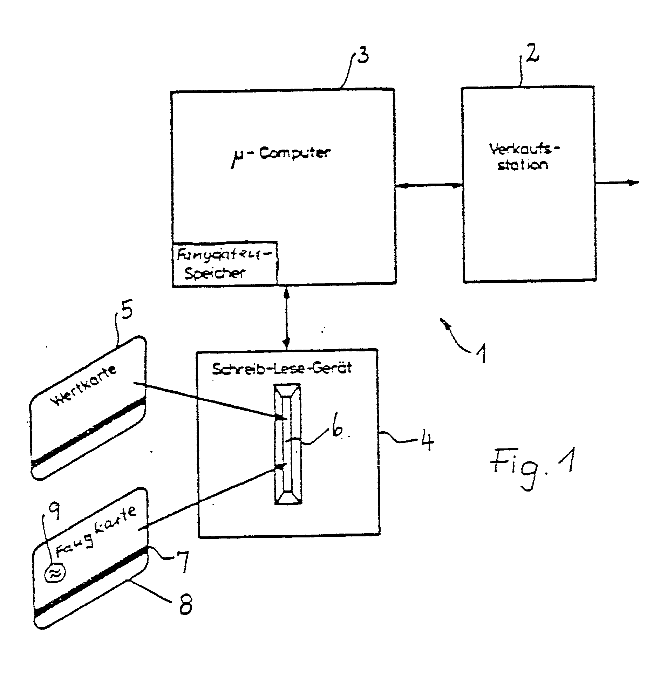

Figur 1 eine schematische Darstellung der Bausteine der Datenverarbeitungsvorrichtung und

Figur 2 eine diagrammartige Darstellung zur Erläuterung der Betriebsweise.

Die Datenverarbeitungsvorrichtung 1 umfaßt eine Station 2, einen Mikrocomputer 3 sowie eine im weiteren als Schreib-Lese-Gerät bezeichnete Schreib-Leseeinrichtung 4. Die Station 2 ist beispielsweise ein Geldausgabeautomat. Das Ausgeben von Geld wird dadurch ausgelöst, daß ein Berechtigter eine Wertkarte 5 in einen Eingabeschlitz 6 des Schreib-Lese-Geräts 4 einführt. Das Schreib-Lese-Gerät weist eine nichtgezeigte Transporteinrichtung auf, mit der die Wertkarte zunächst zum Auswerten der Karte und eventuellem Einschreiben neuer Informationen eingezogen und nach Beendigung des Vorganges wieder ausgegeben wird. Der Mikrocomputer umfaßt einen ROM-Speicher und einen RAM-Speicher. Der RAM-Speicher ist vorzugsweise als nichtflüchtiger Speicher ausgebildet.

Die im wesentlichen durch den ROM-Speicher gebildete Steuerschaltung des Mikrocomputers 3 ist so ausgebildet, daß ein Benutzer mit seiner Wertkarte 5 einen bestimmten Vorgang, beispielsweise das Ausgeben eines Geldbetrages im Rahmen des eingeräumten Kredites aus der Station 2 auslösen kann.

Wird dem Betreiber der Datenverarbeitungsvorrichtung 1 der Verlust der Wertkarte 5 gemeldet, dann gibt dieser einen Befehl zum Sperren der Benutzung der Wertkarte 5 mit allen die Wertkarte 5 kennzeichnenden Individualdaten auf einer Magnetspur 7 eines Datenträgers, der im weiteren als Fangkarte 8 bezeichnet wird, ein. Eine derartige Fangkarte wird all den Stellen zugesandt, die eine solche Station 2 betreiben, also im Falle der Geldausgabeautomaten allen Bankfilialen. Dort wird die Fangkarte wie eine Wertkarte in das Schreib-Lese-Gerät 4 eingegeben. Die Fangkarte 8 wird ausgewertet und insbesondere der Befehl ausgelesen. Das ausgelesene Signal wird dem Mikrocomputer zugeführt. Die Parameter des Mikrocomputers werden durch den Befehl so geändert, daß eine Ausgabe durch die Station 2 mittels der verlorengegangenen Wertkarte 5 nicht mehr ausgelöst werden kann. Nach dem Auslesen des Befehles zum Sperren einer bestimmten Wertkarte wird über das Schreib-Lese-Gerät 4 in der Magnetstreifen 5 der Fangkarte 8 der Zeitpunkt, also die Uhrzeit und das Datum des Auslesens des Befehles eingeschrieben. Die Fangkarte stellt somit eine Quittung der Vornahme der Sperrung dar. Die die Fangkarte versendende Stelle kann sich die Fangkarten von den einzelnen Filialen zurücksenden lassen und somit von der ordnungsgemäßen Durchführung überzeugen, und Manipulationen sind ausgeschlossen. In dem gezeigten Ausführungsbeispiel weist die Fangkarte eine Individualisierungsmarke 9 auf. Mit dieser stellt die Bedienungsperson vor der Benutzung einen die persönliche Identifizierung kennzeichnenden Code ein, so daß sichergestellt ist, daß die Sperrung nur durch eine tatsächlich berechtigte Person erfolgt.

Die Steuerschaltung des Mikrocomputers 3 ist so ausgebildet, daß sie der Vorrichtung zum Datenträgertransport ein Signal derart geben kann, daß diese einen Datenträger 5, dessen Benutzung in der oben beschriebenen Weise gesperrt worden ist, nicht wieder ausgibt. Dadurch wird die Karte schon beim ersten Versuch aus dem Verkehr gezogen.

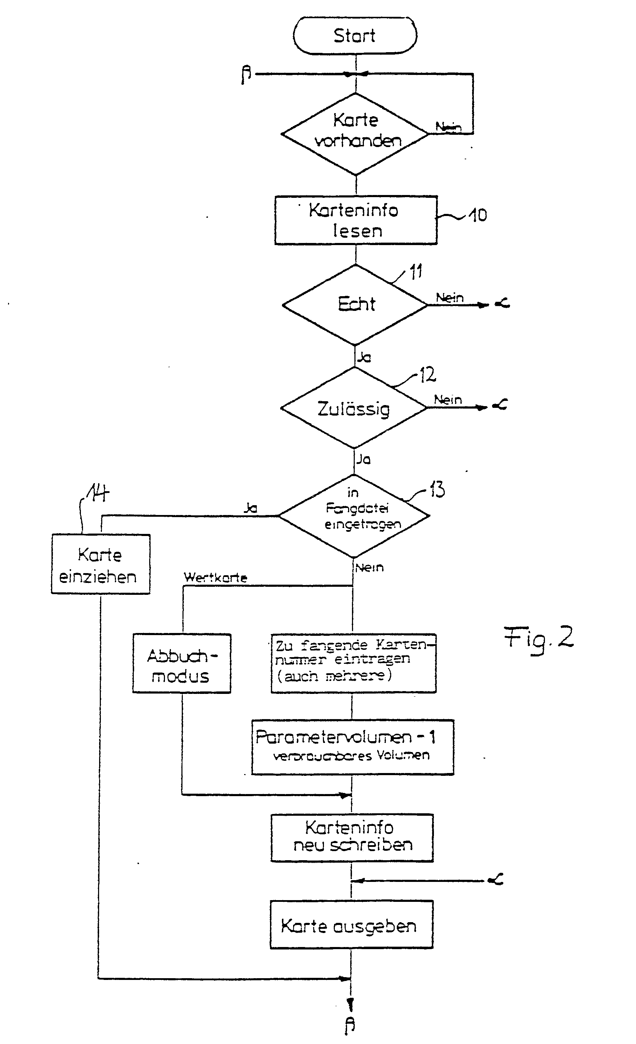

Wie sich insbesondere aus Fig. 2 ergibt, läuft das Verfahren im einzelnen wie folgt ab :

Von der Zentralstelle wird die Fangkarte 8 dem Filialunternehmen, welches die Station 2 betreut, zugesandt. Die berechtigte Bedienungsperson stellt den persönlichen Code an der Individualisierungsmarke 9 ein. Dann wird die Fangkarte 8 in den Schlitz 6 des Schreib-Lese-Gerätes 4 eingeführt. Damit wird der durch den im wesentlichen durch den ROM-Speicher im Mikrocomputer 2 bestimmte Steuerungsvorgang ausgelöst. Mittels einer Schreib-Lese-Einrichtung 10 wird die Karteninformation ausgelesen. Die Daten werden einem Komparator 11 des Mikrocomputers zugeführt, der durch Vergleich von die Fangkarte individualisierenden Merkmalen mit den in der Magnetspur eingelesenen codierten Informationen die Echtheit der Karte prüft. Wird die Echtheit verneint, erfolgt eine Ausgabe der Karte, und die Datenverarbeitungsvorrichtung 1 geht in den Betriebsbereitschaftszustand zurück. Wird die Echtheit der Fangkarte bejaht, dann nimmt ein Komparator 12 einen Vergleich des durch die Einstellung der Individualisierungsmarke 9 angegebenen persönlichen Codes mit dem sich aus der Eintragung in der Magnetspur ergebenden Code vor. Wird die Übereinstimmung verneint, wird die Fangkarte ausgegeben, und die Vorrichtung geht in den Betriebsbereitschaftszustand zurück. Ergibt sich dagegen aus der Übereinstimmung, daß der Benutzer der tatsächlich Berechtigte ist, dann wird der sich aus der Eintragung in der Magnetspur 7 ergegende Befehl in den nichtflüchtigen Speicher eingelesen. In der Magnetspur 7 ist vorzugsweise auch eine im weiteren als Parametervolumen bezeichnete Information darüber enthalten, in wievielen Stationen die Fangkarte 8 berechtigterweise benutzt werden darf. Nach dem Auslesen gibt der Mikrocomputer ein Signal an die Schreib-Lese-Einrichtung 10, welches das um die Zahl 1 verminderte neue Parametervolumen wiederum in die Magnetspur einschreiben läßt. Anschließend erfolgt das Einschreiben der Zeit der Durchführung des Auslesens der Fangkarte, und dann wird diese wieder ausgegeben und die Vorrichtung in eine erneute Betriebsbereitschaft gesetzt.

Versucht nun ein Dritter, die Station 2 mittels der als verloren gemeldeten Wertkarte 5 zu betätigen, dann erfolgt wie bei dem oben beschriebenen Vorgang zunächst das Auslesen der Karteninformation, das Vergleichen von die Karte individualisierenden Merkmalen mit den in der Magnetspur eingelesenen codierten Informationen zur Prüfung der Echtheit der Karte. Wird die Echtheit bestätigt, dann wird in einem Komparator 13 die die Wertkarte 5 individualisierende Information mit den mittels der Fangkarte 8 eingegebenen Sperrbefehlen verglichen. Wird die Übereinstimmung der Daten festgestellt, dann liefert der Komparator 13 einer Sperrschaltung 14 ein Ausgangssignal, welches die Vorrichtung zum Datenträgertransport des Schreib-Lese-Gerätes 4 so ansteuert, daß die Wertkarte 5 nicht mehr ausgegeben wird. Vorzugsweise weist die Vorrichtung auf ihrer der Eingabeöffnung gegenüberliegenden Seite im Inneren einen Auffangraum auf, in den die Wertkarte hineinbewegt wird, so daß das Schreib-Lese-Gerät zur Betätigung durch weitere Wertkarten frei ist.

In dem oben beschriebenen Ausführungsbeispiel ist der Mikrocomputer 3 mit dem Schreib-Lese-Gerät 4 Bestandteil der die Ausgabestation 2 umfassenden Datenverarbeitungsvorrichtung. Grundsätzlich ist es aber auch möglich, unabhängig von der eigentlichen Station 2, also beispielsweise dem eigentlichen Geldausgabeautomaten, den Mikrocomputer 3 mit dem Schreib-Lese-Gerät 4 als separate Einheit auszubilden und diese separate Einheit solchen Instituten zur Verfügung zu stellen, die noch nicht über eine vollständige oben beschriebene Station verfügen und aus diesem Grunde das Geld oder eine Ware oder eine Dienstleistung gegen Vorzeigen von entsprechenden Wertkarten ausgeben bzw. durchführen. In diesem Fall kann die Einheit aus Mikrocomputer 3 und Schreib-Lese-Gerät 4 in gleicher Weise wie oben den Befehl zum Einfangen der verlorengegangenen Wertkarten über eine Fangkarte 8 aufnehmen. Kommt nun ein Kunde zu einer Filiale und möchte beispielsweise mit der verlorengegangenen Wertkarte 5 Geld abheden, dann wird diese zur Prüfung in das Schreib-Lese-Gerät eingegeben. Stellt der Komparator 13 fest, daß diese Karte als gesperrt gemeldet ist, wird die Karte in gleicher Weise wie bei dem oben beschriebenen Beispiel einbehalten. Das Bedienungspersonal muß also nicht mehr in Schriftstücken nachprüfen, ob eine solche Wertkarte als verlustig gemeldet worden ist.

Die Erfindung wurde oben an dem Beispiel von Geldausgabestationen beschrieben. Die Verwendung von solchen Fangkarten kann aber auch bei allen anderen Datenverarbeitungsvorrichtungen Anwendung finden, bei denen ein Vorgang mittels auf einem individuellen Datenträger eingetragener Daten auslösbar ist. So können verlorengegangene Befehlskarten, Stammkarten, Ausweiskarten, Scheckkarten o. ä. mit der oben beschriebenen Erfindung wertlos gemacht und-/oder aus dem Verkehr gezogen werden. Auch eine Fangkarte selbst kann als verloren gemeldet und von der weiteren Benutzung dadurch ausgeschlossen werden, daß ihre Daten mittels einer dritten Fangkarte in die Station eingegeben werden.

### Patentansprüche

1. Datenverarbeitungsvorrichtung mit einer Eingabeeinrichtung mit einer Schreib-Leseeinrichtung (4) zum Auslesen von den Bearbeitungsvorgang auslösenden Daten eines ersten Typs von Datenträgern (5) wie z. B. Wertkarten oder Kreditkarten und Beschriften derselben, und mit einem zusätzlichen Speicher für die Speicherung von Daten solcher Datenträger des ersten Typs, die nicht mehr Gültigkeit haben sollen, ferner mit einem Komparator, der die Daten des Ersten Typs von Datenträgern (5) mit den Daten im zusätzlichen Speicher vergleicht und bei Koinzidenz die Sperrung der Auslösung des Bearbeitungsvorganges bewirkt, dadurch gekennzeichnet, daß der zusätzliche Speicher direkt mit der Schreib-Leseeinrichtung (4) verbunden ist zum Einlesen der Daten über solche Datenträger, die nicht mehr Gültigkeit haben sollen, von einem zweiten Typ von Datenträgern (Fangkarte 8), so daß das Auslesen der den Bearbeitungsvorgang sperrenden Daten des zweiten Typs von Datenträgern (8) über dieselbe Eingabevorrichtung geschieht wie das Auslesen der Daten der Datenträger (5) des ersten Typs.

2. Datenverarbeitungsvorrichtung nach Anspruch 1, dadurch gekennzeichnet, daß der Speicher so mit der Schreib-Leseeinrichtung (4) verbunden ist, daß nach dem Einschreiben in den Speicher eine Quittung auf den von der Schreib-Leseeinrichtung (4) einzulesenden Datenträger (8) aufgeschrieben wird.

## Claims

1. Data processing installation with input means comprising read-write-means (4) for reading data of a first type of data carriers (5) such as value cards or credit cards and for writing thereon, said data enabling the processing operation, and an additional memory for storing data of such data carriers of the first type which are to be no longer valid, furthermore with a comparator comparing the data of the first type of data carriers (5) with the data in the additional memory and causing the enabling of the processing operation to be blocked in the case of coincidence, characterized in that the additional memory is directly connected with the read-write-means for reading data concerning such data carriers which are to be no longer valid from a second type of data carriers (trap card 8) such that the reading of the data of the second type of data carriers (8) blocking the processing operation if performed by means of the same input means as the reading of the data of the data carriers (5) of the first type.

2. Data processing installation according to claim 1, characterized in that the memory is connected with the read-write-means (4) such that after writing into the memory a receipt is recorded on the data carrier (8) to be read by the read-write-means (4).

## Revendications

1. Dispositif de traitement de données, avec un dispositif d'entrée possédant un dispositif de lecture et d'écriture 4, destiné à extraire des données, qui déclenchent un processus de traitement, d'un premier type de supports de données 5, comme par exemple des cartes de valeur ou des cartes de crédit, et à leur impression, et avec une mémoire supplémentaire pour la mémorisation de données de ces supports de données du premier type et qui ne doivent plus avoir de validité, et en outre avec un comparateur, qui compare les données du premier type de supports de données 5 aux données se trouvant dans la mémoire supplémentaire et, en cas de coïncidence, provoque l'invalidation du déclenchement du processus de traitement, caractérisé en ce que la mémoire supplémentaire est directement reliée au dispositif de lecture et d'écriture 4, pour introduction des données, par l'intermédiaire des supports de données qui ne doivent plus avoir de validité, d'un deuxième type de supports de données (carte collectrice 8), de telle sorte que l'extraction des données, qui invalident le processus de traitement, du deuxième type de supports de données 8, s'effectue par l'intermédiaire du même dispositif d'entrée que l'extraction des données des supports de données 5 du premier type.

2. Dispositif de traitement de données selon la revendication 1, caractérisé en ce que la mémoire est reliée avec le dispositif de lecture et d'écriture 4 de façon que, après inscription dans la mémoire, un accusé de réception est inscrit sur le support de données 8 qui devra être lu par le dispositif de lecture et d'écriture 4.

Fig. 1

Fig. 2